**Europäisches Patentamt**

**European Patent Office**

**Office européen des brevets**

(11) Publication number: **0 118 026**
**A1**

# (12) EUROPEAN PATENT APPLICATION

(21) Application number: **84101017.6**

(22) Date of filing: **01.02.84**

(51) Int. Cl.³: **H 01 M 10/36**

(30) Priority: **04.02.83 JP 16134/83**

(43) Date of publication of application:
**12.09.84 Bulletin 84/37**

(84) Designated Contracting States:
**BE CH DE FR GB LI NL**

(71) Applicant: **HITACHI, LTD.**
**6, Kanda Surugadai 4-chome Chiyoda-ku Tokyo 100(JP)**

(71) Applicant: **SHOWA DENKO K.K.**
**13-9, Shiba Daimon 1-chome Minato-ku Tokyo 105(JP)**

(72) Inventor: **Fujita, Kazunori**
**2650-24, Muramatsu Toukai-mura Naka-gun Ibaraki-ken(JP)**

(72) Inventor: **Nishimura, Shigeoki**
**2577-87, Higashiishikawa Katsuta-shi Ibaraki-ken(JP)**

(72) Inventor: **Ebato, Noboru**
**4-6-5, Ohkubo-cho Hitachi-shi Ibaraki-ken(JP)**

(72) Inventor: **Sugimoto, Hiroyuki**
**Yuho-ryo 6-20-3, Ayukawa-cho Hitachi-shi Ibaraki-ken(JP)**

(72) Inventor: **Tohyama, Atsuko**
**6-7-6-403, Ohmika-cho Hitachi-shi Ibaraki-ken(JP)**

(72) Inventor: **Matsuda, Shinpei**
**1722-7, Shirakata Toukai-mura Naka-gun Ibaraki-ken(JP)**

(74) Representative: **Strehl, Peter, Dipl.-Ing. et al, Strehl, Schübel-Hopf, Schulz Patentanwälte Widenmayerstrasse 17 Postfach 22 03 45 D-8000 München 22(DE)**

(54) Secondary cell using polymeric material.

(57) This invention discloses a secondary cell using a polymeric material comprising:

(a) a positive electrode (1) containing a polymer having conjugated double bonds capable of forming electrochemically reversible charge-transfer complexes with negative ions in an electrolyte,

(b) a negative electrode (2) containing carbon having a graphite ring capable of forming electrochemically reversible interlaminar compounds with positive ions in said electrolyte, and

(c) an electrolyte solution (5) interposed between said positive electrode (1) and said negative electrode (2).

FIG. 1

SPECIFICATION

Secondary Cell using Polymeric Material

Background of the Invention

[Field of the Invention]

This invention relates to a re-chargeable cell with an electrode of an organic polymer, such as polyacetylene, and an opposite electrode of carbon or graphite.

[Description of the Prior Art]

Polymers, such as polyacetylenes, having conjugated double bonds are known to produce P-type electrically-conductive polyacetylenes by electrochemically doping anions, such as $ClO_4^-$, $PF_6^-$, $BF_4^-$, etc., or n-type electrically-conductive polyacetylenes by electrochemically doping cations, such as $Li^+$ or $(C_4H_9)_4N^+$ etc. [J.C.S. Chem. Comm. (1979) pp 594-595, C&EN, 26, 39 (1981)]. Re-chargeable cells using this electrochemical doping have been reported (U.S.P. 4321114). An example of such a cell uses a polyacetylene film as the positive and negative electrodes and propylene carbonate in which $(C_4H_9)_4NClO_4$ is dissolved as the electrolytic solution. The cell exhibits an open circuit voltage of 2.5V and a short-circuit current of 11.1mA [J.C.S. Chem. Comm. (1981) pp 317-319]. This secondary cell using electrodes of poly-

0118026

acetylene has a relatively larger energy density (Wh/kg) and power density (W/kg), so that it has recently attracted much attention.

Cells using polyacetylene have been proposed in which the doping is done by a discharge reaction and Li is used for the negative electrode and polyacetylene for the positive electrode, or in which the doping is done by charge-reaction and Li is used for the negative electrode and polyacetylene for the positive electrode, or which uses polyacetylene for both the positive and negative electrodes.

With such a construction, a cell with a lithium electrode has the charge reaction of $Li^+ + e \rightarrow Li$, creating dendritic deposition of Li, so that it has the defect in that short-circuits between the electrodes occur. Other similar cells at present still have an unsatisfactory cell performance, so that they are not put to practical use. In particular, the lifetime (number of charge and discharge cycles) of such cells is short. European Patent Publication No. 50441 (Japanese Patent Laid-Open No. 123659/1982) proposes a cell with a positive electrode of polymer to which carbon is added to thereby improve its electrical conductivity.

Summary of the Invention

[Object of the Invention]

An object of the present invention is to provide a

- 3 -                        0118026

secondary cell using a polymer which has a superior cell performance, especially its lifetime characteristics, thereby solving the above problem.

[Statement of the Invention]

The inventors have ascertained that the lifetime of a cell using polyacetylene for both the positive and negative electrodes with an organic electrolytic solution, is reduced by the polyacetylene of the negative electrode. In other words, when cells using positive electrodes of polyacetylene and negative electrodes of polyacetylene or lithium were compared, the cell with the lithium negative electrode was found to have a superior cell lifetime. As a result of spectroscopic analysis of the polyacetylene of the negative electrodes of cells whose lifetime was over, it was found that the conjugated double bonds of polyacetylene had changed.

The main point of the invention lies in that, after consideration of the above facts, the cell of the invention uses carbon in the electrodes for doping the positive ions, and polyacetylene in the positive electrode for doping the negative ion. A cell of this system has not been found yet. The secondary cell of this invention using a polymeric material comprises:

(a)   a positive electrode containing a polymeric material having conjugated double bonds capable of forming electrochemically reversible charge-transfer complexes with the negative ions in an electrolyte,

(b)  a negative electrode containing carbon having a graphite ring capable of forming electrochemically reversible interlaminar compounds with the positive ions in the electrolyte, and

(c)  an electrolytic solution interposed between the positive electrode and the negative electrode.

The present invention uses carbon for the negative electrode to form electrochemically reversible interlaminar compounds with the electrolyte, enabling an improvement in the lifetime characteristics. The interlaminar compounds are assumed to be formed as follows. Carbon in a form such as graphite forms an $SP^2$ hybrid orbital with three of its four valance electrons, and forms a layer consisting of a stable hexagonal honeycomb lattice with strong covalent bonds. The remaining electron stays in the $\pi$ orbit perpendicular to the layer. Therefore, the carbon generates charge transfers between inserted substances such as Li, so as to produce an extremely stable interlaminar compound. However, the double bonds in a polymer such as polyacetylene, with its conjugated double bonds, form charge-transfer complexes and are so unstable that they tend to become single bonds, and ionic bonds are generated after the charge-transfer complexes with the positive ions of the electrolyte are formed, and reactions with a solvent leads to the formation of non-dissociable compounds. The ionic bonds increase as charge and discharge are repeated, resulting in a drop in the coulomb efficiency which reduces the lifetime characteristics.

The carbon used in the invention includes, for example, graphite or graphitized carbon produced. In particular, since the interlaminar compounds can be formed with graphite and the positive ions of the electrolyte, it is advantageous with regard to energy density and power density. The carbon itself is preferably fibrous because this has an increased surface area, but carbon powder in a sheet-like form can also be used by preparing sheet-like form. In any case, fluoro-carbon resins or other binders may be used for binding, if required.

The polymer used for the positive electrode includes, for example, polyacetylene, polyparaphenylene, poly (1, 6 heptagin), polypyrrole, polythionylene, poly(P-phenylene sulfide), poly(P-phenylene oxide), etc.

In the present invention, $Li^+$ is the most preferable as an example of the positive ions in the electrolyte, but other alkali metals such as $Na^+$, $K^+$, $Rb^+$ and $Cs^+$, quaternary ammonium ions such as $(CH_3)_4N^+$, $(C_2H_5)_4N^+$, $(C_3H_7)_4N^+$ or $(C_4H_9)_4N^+$, can be used. At least one or more or these electrolytes are dissolved in an organic solvent and used as the electrolytic solution. The negative ions are exemplified by $ClO_4^-$, $BF_4^-$, $AlCl_4^-$, $AsF_6^-$, $PF_6^-$, $SCN^-$, $SbF_6^-$, $NbF_6^-$, $TaF_6^-$, etc.

For the organic solvent, any substance which is not active with respect to the electrodes or the materials of the other cell components, which dissolve the electrolyte to give it a higher conductivity, and which are not decomposed by charge-discharge can be used. In the present invention, for example, propylene carbonate is suitable, but either one or a mixture of two or more solvents can be used, such as tetrahydrofuran, γ-butylolactone, 1;2-dimethoxyethane, dioxane, dichloroethane, 1,2-dichloroethane, N,N-dimethylformamide, dimethyl sulfoxide, dimethyl sulfite, ethylene carbonate, 1,3-dioxolane, nitromethane, formamide, 2-methyl-tetrahydrofuran, and sulforan.

In the present invention, the electrolyte may be a liquid, paste or a solid.

A separator is often used between the positive electrode and the negative electrode to prevent short circuits caused by the contact of the electrodes, this need only be chemically stable with respect to the positive and negative electrodes and the electrolyte, electrically insulating, and porous so as to allow the electrolytic solution to pass or be contained. The material for the separator employs polytetra fluoroethylene, polypropylene, polyethylene, polyvinyl chloride, phenolic plastic, etc., or an inorganic fibrous base material such as glass fiber, alumina fiber, potassium titanate fiber, etc. The inventors have also found that it is effective to have the separator carry an absorbent powder for water and substances which are likely to be decomposed by cell reactions, or an absorbent powder can be provided in the cell, as appropriate. In this way, the current efficiency during charge and discharge can be improved, and the lifetime of the cell can be increased. For the absorbent powder, one or more inorganic absorbents can be used, such as porous alumina, silica or aluminosilicate compounds (molecular sieves); or organic synthetic resins such as a styrenedivinylbenzene cross-linked gel, or an acrylester resin; or activated carbons.

Brief Description of the Drawing

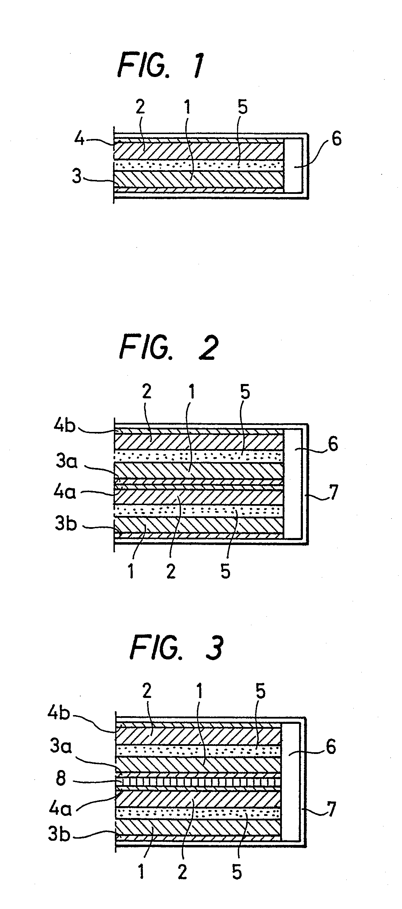

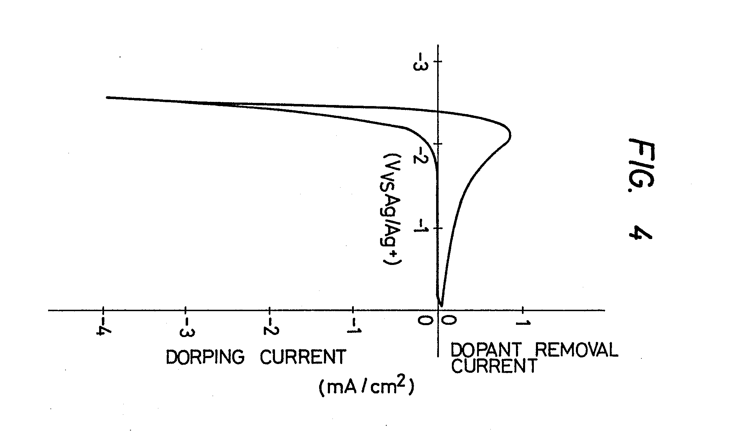

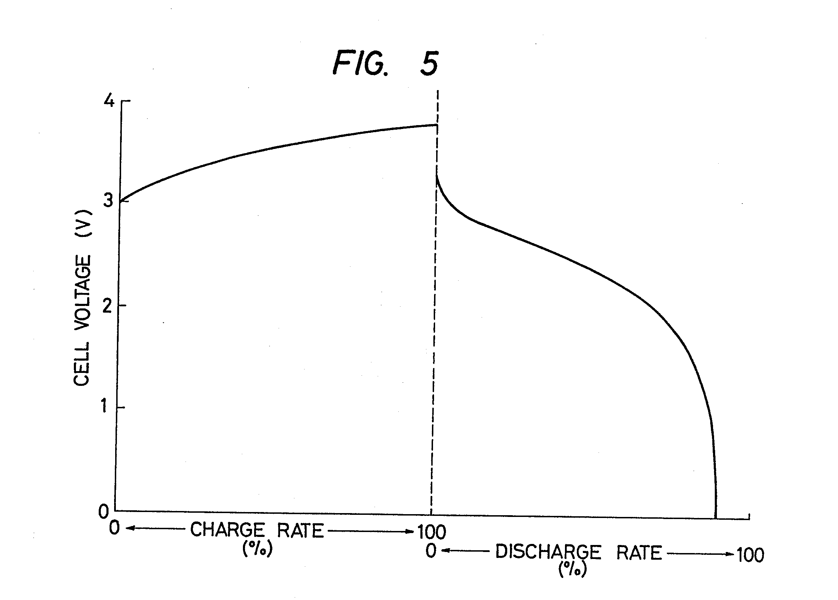

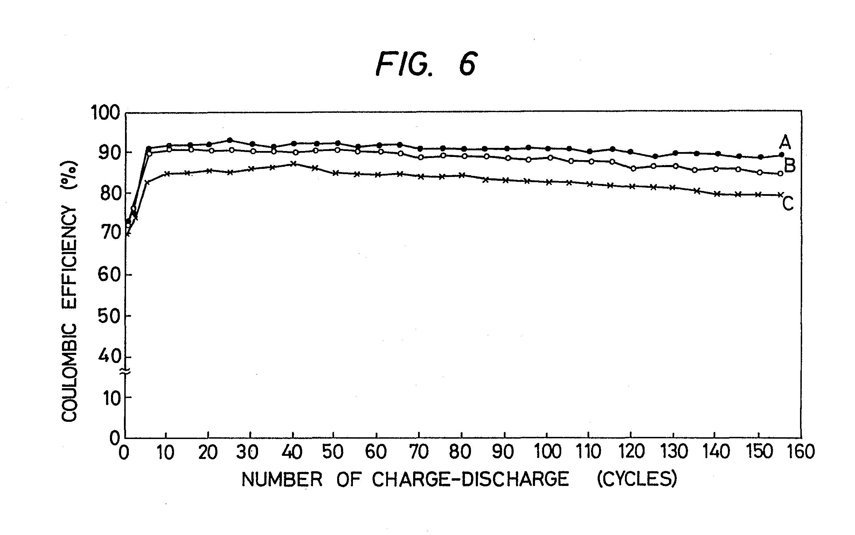

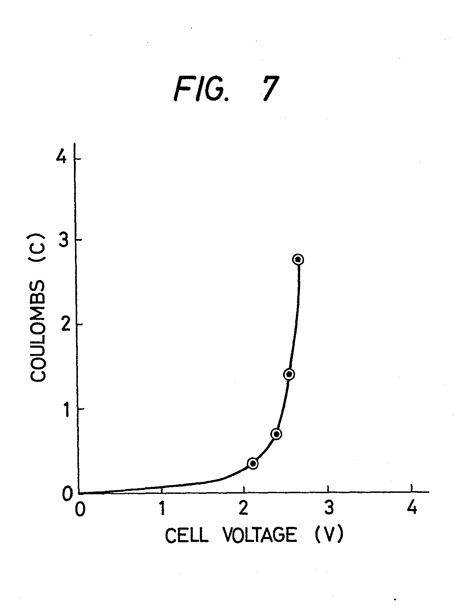

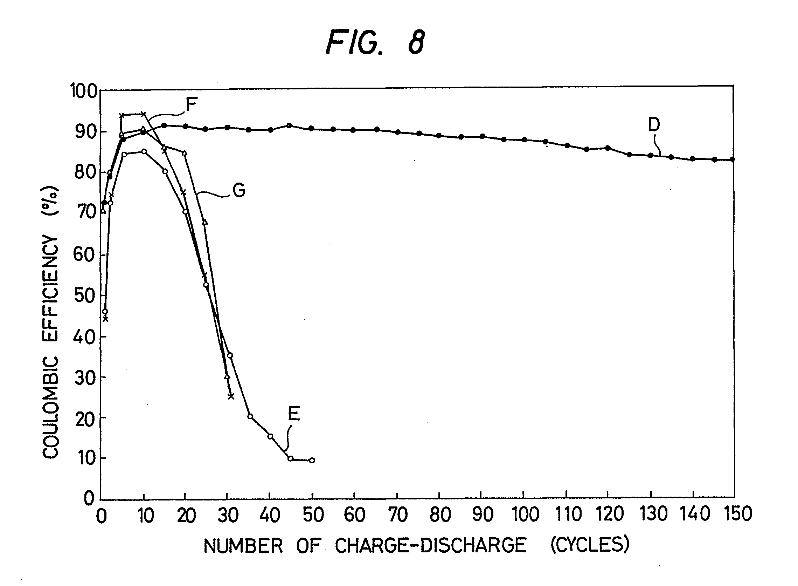

Figs. 1 through 3 are partial sectioned views of embodiments of the secondary cell of the invention, Fig. 4 is a volt-amp graph of a cell when carbon is used as an electrode, Fig. 5 shows the charge and discharge characteristics of a cell using a negative electrode of carbon and a positive electrode of polyacetylene, Fig. 6 shows the relationship between the number of charge and discharge cycles and the coulomb efficiency, Fig. 7 shows the relationship between the coulomb number and the cell voltage, and Fig. 8 shows the relationship between the number of charge and discharge cycles of different cells and the coulomb efficiency.

The present invention will be described below in accordance with the drawings. Figs. 1 through 3 are partial sectioned structural views of an embodiment of a secondary cell of the invention, in which reference numeral 1 designates a positive electrode; 2 a negative electrode; 3, 3a and 3b thin metal layers each provided as a current collector on one side surface of the positive electrode 1; 4, 4a and 4b thin metal layers each provided as a current collector on one side surface of the negative electrode 2; 5 an insulative porous separator holding the electrolyte; 6 a cell holder; and 7 a cell casing. Fig. 1 shows the construction of a single cell, Figs. 2 and 3 show that of secondary cells in which two single cells are stacked. When cells are stacked, only one thin metal layer 3a or 4a can be provided, or a sheet of metal foil (not shown) can be provided between the adjacent positive and negative electrodes, so that the cell is basically operable. The inventors, however, have discovered that if both thin metal layers 3a and 4a are provided, as shown in Figs. 2 and 3, this provides an increase in the current collection efficiency.

They have also found after research that it is effective to sandwich a piece of metal foil 8 which is impermeable to the electrolyte between the unit cells, in other words, between the adjacent layers 3a and 4a. Such a sandwiching of the metal foil 8 can prevent the electrolyte permeating through adjacent cells and reducing the cell characteristics, which has been confirmed by the inventors.

When the unit cells of this invention are stacked, they can be connected electrically in series, in parallel, or in combinations thereof.

This invention also has the effect of preventing the effects (invasion) of oxygen or water from the exterior by providing a shielding layer consisting of an inorganic insulating layer between the cell body and the cell casing, or by forming the metal layers 3b and 4b shown in Figs. 1 and 2, in such a thickness that they are impermeable to oxygen and water. It is also effective to seal the casing.

Examples

Example 1

In this cell, the working electrode was a sheet of carbon paper 10mm in diameter, the opposite electrode was platinum, the reference electrode was silver/silver chloride $(Ag/Ag^+)$, and the organic electrolytic solution was propylene carbonate in which $LiClO_4$ was dissolved to concentration of 1 mol/$\ell$. The electrochemical behaviour of the cell was examined by potential scanning. Fig. 4 is a volt-amp graph at a potential scanning speed of 1mV/sec, in which the

0118026

current flow is negative when Li is doped into the carbon, and positive when Li is removed from the carbon. The potential at the beginning of the doping is -2V ($Ag/Ag^+$), which is more positive than that at which $Li^+$ is reduced to Li metal. The ratio of the quantity of electricity during doping to that during undoping, the coulombic efficiency, is 94%, a very high efficiency, which shows that the $Li^+$ easily enters the carbon electrochemically, and comes out therefrom.

Example 2

The positive electrode of this cell was polyacetylene of a density of 0.9, 250µm in thickness and 10mm in diameter, the negative electrode was a sheet of carbon paper 10mm in diameter, the same organic electrolytic solution as that of Example 1 was used, the cell was assembled as shown in Fig. 1, and its performance was examined. Fig. 5 shows the charge and discharge characteristics when the cell was charged at a charging current density of $2mA/cm^2$ for a charging time of 20 minutes, and discharged at a discharge current density of $2mA/cm^2$ until the cell voltage reached 1V; the relationship between the number of charge and discharge cycle and the coulomb efficiency is shown in Fig. 6-A.

The open circuit voltage of this cell was 3.2V and the ratio of the quantity of electricity during charge to that during discharge, the coulomb efficiency, was 92%, very high.

0118026

The coulomb efficiency obtained during the 150th charge and discharge cycle was 89-90%.

Example 3

The same positive and negative electrodes as those of Example 2, and an organic electrolytic solution of propylene carbonate in which $(C_2H_5)_4NClO_4$ was dissolved to a concentration of 1 mol/l, were used to assemble the cell shown in Fig. 1. The charge and discharge conditions were the same as those of Example 2. Fig. 6-B shows the relationship between the number of charge and discharge cycles and the coulomb efficiency. The open circuit voltage of the cell was 3.0V, the ratio of the quantity of electricity during charge to that during discharge, the coulomb efficiency, was 90%. The coulomb efficiency obtained during the 150th charge and discharge cycle remained high at 85%.

Fig. 7 shows the relationship between the quantity of electricity and the voltage when the cell was charged by a constant current. If the cell were treated in the same way as the charging and discharging of a condenser, a straight line relationship between the quantity of electricity and voltage would hold. However, such a relationship does not hold in this Example, as seen from Fig. 7, from which it can be said that this cell with a negative electrode of carbon and a positive electrode of polyacetylene is based on the doping and undoping of the dopant.

Example 4

The positive electrode of this cell was polyacetylene of a density of 0.9, 250µm in thickness, and 10mm in diameter, the negative electrode was a sheet of graphite (by Hitachi Kasei Co., Ltd.) formed of compressed graphite powder 220µm in thickness, 0.97g/cc in apparent density, and 10mm in diameter, and an organic electrolytic solution of propylene carbonate in which $LiBF_4$ was dissolved to a concentration of 1 mol/l was used, and the cell was assembled as shown in Fig. 1. The cell was charged for 20 minutes and discharged until the cell voltage dropped to 1V, at a charge and discharge current density of $2mA/cm^2$. Fig. 6-C shows the relationship between the number of charge and discharge cycles and the coulomb efficiency. The open circuit voltage was 3.2V, the coulomb efficiency in the initial charge and discharge cycle was 85%, and the coulomb efficiency at the 150th cycle was 80%.

Example 5

The same electrodes as those of Example 4, but a different organic electrolytic solution, were used to assemble the cell shown in Fig. 1, the organic electrolytic solution was propylene in which $(C_2H_5)_4 NBF_4$ was dissolved to a concentration of 1 mol/l. Charge and discharge were carried out under the same conditions as those of Example 4. Fig. 8-D shows the relationship between the number of

0118026

charge and discharge cycles and the coulomb efficiency. The open circuit voltage for this cell was 3.0V, the coulomb efficiency during the initial charge and discharge cycles was 90%, and that during the 150th cycle was 82%.

Comparative Example 1

The positive and negative electrodes of this cell were polyacetylene of a density of 0.29, 60μm in thickness, and 10mm in diameter, the organic electrolyte solution was propylene carbonate in which $(C_2H_5)_4NBF_4$ was dissolved to a concentration of 1 mol/l, and it was assembled as shown in Fig. 1. The cell was charged at a current density of 5 mA/cm$^2$ until the doping ratio (the ratio of the mole number of the dopant by doping to that of the polyacetylene used, as a mole percentage) reached 4.0%, and was then discharged at a current density of 5 mA/cm$^2$ until the cell voltage dropped to 1V. The relationship between the number of charge and discharge cycles and the coulomb efficiency was measured, the results of which are shown in Fig. 8-E.

The open circuit voltage of this cell was 2.5V, the coulomb efficiency during initial charge and discharge cycles was 85%, and that during the 50th charge and discharge cycle was 9%.

Comparative Example 2

The organic electrolytic solution used in this cell was sulforan in which $LiClO_4$ was dissolved to a concentration of 1 mol/l, the positive and negative electrodes were the same as those in Example 1, and charge and discharge tests were carried out at a current density of 1 mA/cm$^2$ in the same way as in Comparative Example 1. Fig. 8-F shows the number of charge and discharge cycles against the coulomb efficiency of this cell.

The open circuit voltage of the cell was 2.5V, the coulomb efficiency during the initial charge and discharge cycles was 94%, but this efficiency decreased as the number of cycles increased, and had dropped to 25% by the 31st cycle.

Comparative Example 3

The organic electrolytic solution used in this cell was sulforan in which LiBF$_4$ was dissolved to a concentration of 1 mol/l, the positive and negative electrodes were the same as those used in Comparative Example 1, and the same charge and discharge test as that of Comparative Example 1 was carried out at a current density of 1 mA/cm$^2$. Fig. 8-G shows the number of charge and discharge cycles against the coulomb efficiency of this cell. The open circuit voltage of the cell was 2.5V, the Coulomb efficiency during the initial charge and discharge cycles was 91-92%, but this efficiency fell as the number of cycles increased, and had dropped to 32% by the 30th cycle.

As can be seen from the above examples and comparative examples, in the case the negative electrode is carbon and the positive electrode polyacetylene, the coulomb efficiency for charge and discharge is kept high, having the effect of extending the lifetime of the cell.

Claims:

1. A secondary cell using a polymeric material, c h a r a c t e r i z e d   by
(a) a positive electrode (1) containing a polymeric material having conjugated double bonds capable of forming electrochemically reversible charge-transfer complexes with negative ions in an electrolyte,
(b) a negative electrode (2) containing carbon having a graphite ring capable of forming electrochemically reversible interlaminar compounds with positive ions in said electrolyte, and
(c) an electrolytic solution (5) interposed between said positive electrode (1) and said negative electrode (2).

2. A secondary cell using a polymeric material, c h a r a c t e r i z e d   by
(a) a positive electrode (1) containing a polymeric material having conjugated double bond capable of forming electrochemically reversible charge-transfer complexes with negative ions in an electrolyte,
(b) a negative electrode (2) containing carbon having a graphite ring capable of forming electrochemically reversible interlaminar compounds with positive ions in said electrolyte, and

(c) an electrically insulative porous separator (5)
holding an electrolytic solution, interposed between
said positive electrode (1) and said negative electrode
(2).

3. The secondary cell according to claim 2,
c h a r a c t e r i z e d   in that
said electrically insulative porous separator (5) is a
fibrous base material.

4. The secondary cell according to any of claims 1 to 3,
c h a r a c t e r i z e d   in that
the predominant amount of said carbon having said graphite
ring is graphite.

5. The secondary cell according to any of claims 1 to 3,
c h a r a c t e r i z e d   in that
said carbon consists essentially of graphite.

6. The secondary cell according to any of claims 1 to 5,
c h a r a c t e r i z e d   in that
said polymeric material is polyacetylene.

Ah/bi

0118026

FIG. 1

FIG. 2

FIG. 3

## FIG. 4

FIG. 5

# FIG. 6

FIG. 7

FIG. 8

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | EP-A-0 070 107 (ROHM & HAAS CO.) * Page 4, lines 6-33; page 10, lines 7-23; page 13, claims * | 1-6 | H 01 M 10/36 |
| Y | CHEMICAL ABSTRACTS, vol. 86, no. 22, 30th May 1977, page 484, no. 162751y, Columbus, Ohio, US J.O. BESENHARD: "The electrochemical preparation and properties of ionic alkali metal- and tetraalkylammonium-graphite intercalation compounds in organic electrolytes" & CARBON 1976, 14(2), 111-15 * Abstract * | 1,4,5, 6 | |
| D,Y | EP-A-0 050 441 (ROHM & HAAS CO.) * Page 4; page 10, example 1 * | 2,3 | |
| P,Y | EP-A-0 092 713 (ROBERT BOSCH) * Page 3, 2nd paragraph * | 1 | TECHNICAL FIELDS SEARCHED (Int. Cl. ³)<br><br>H 01 M 10/36<br>H 01 M 10/40<br>H 01 M 4/58<br>H 01 M 4/60 |
| P,Y | JOURNAL OF POWER SOURCES, vol. 9, no. 3/4, April-May 1983, pages 365-371, Elsevier Sequoia, Amsterdam, NL R. YAZAMI et al.: "A reversible graphite-lithium negative electrode for electrochemical generators" * Page 365, summary * | 1 | |

-/-

The present search report has been drawn up for all claims

| Place of search | Date of completion of the search | Examiner |
|---|---|---|
| THE HAGUE | 11-05-1984 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| Y | CHEMICAL ABSTRACTS, vol. 83, no. 22, 1st December 1975, page 414, no. 185403p, Columbus, Ohio, US Y. TAKADA et al.: "Behavior of some carbon electrodes in organic electrolytes" & DENKI KAGAKU OYOBI KOGYO BUTSURI KAGAKU 1975, 43(6), 329-33 * Abstract * | 1 | |
| A | J. CHEM. SOC. CHEM. COMMUN., 1982, pages 1158-1159 TAKASHI NOGAMI et al.: "Light-weight, stable, and rechargeable battery with an activated carbon fibre electrode" * Whole document * | 1 | |

TECHNICAL FIELDS SEARCHED (Int. Cl. 3)

The present search report has been drawn up for all claims

| Place of search THE HAGUE | Date of completion of the search 11-05-1984 | Examiner DE VOS L.A.R. |
|---|---|---|